# EUROPEAN PATENT APPLICATION

(11) **EP 4 772 777 A1**
(43) Date of publication of application: **08.07.2026**
(21) Application number: 24858443.5
(22) Date of filing: 22.08.2024
(51) Int. Cl.: F16K 1/38, F16K 1/32, F16K 1/42, F25B 41/34

(54) **ELECTRONIC EXPANSION VALVE, INTEGRATED VALVE, THERMAL MANAGEMENT SYSTEM, AND VEHICLE**

(30) Priority: 31.08.2023 CN 202311135827
(71) Applicant: BYD Company Limited, Shenzhen, Guangdong 518118 (CN)
(72) Inventor: CHEN, Tuping, Shenzhen, Guangdong 518118 (CN); XU, Min, Shenzhen, Guangdong 518118 (CN); YE, Meijiao, Shenzhen, Guangdong 518118 (CN); LIU, Feng, Shenzhen, Guangdong 518118 (CN); LIU, Leqiang, Shenzhen, Guangdong 518118 (CN)
(74) Representative: Mathys & Squire
(86) International application number: PCT/CN2024/114021
(87) International publication number: WO 2025/044901

(57) **Abstract**

An electronic expansion valve (1) and an integrated valve, a heat management system, and a vehicle are provided. The electronic expansion valve (1) includes: a valve seat (12), where the valve seat (12) is provided with a valve port (131); a rotation assembly; a valve needle assembly (20), where the valve needle assembly (20) includes a valve stem (21) and a valve needle (22); the valve stem (21) cooperates with the rotation assembly, to convert rotation of the rotation assembly into reciprocating of the valve stem (21); and the valve needle (22) is configured to open or block the valve port (131); and a first elastic member (44), where when the valve needle (22) blocks the valve port (131), the valve stem (21) is capable of moving toward the valve port (131) to compress the first elastic member (44) to form a preloading force.

## Description

### CROSS-REFERENCE TO RELATED APPLICATIONS

This application is based on Chinese Patent Application No. 2023111358279, filed on August31, 2023, and claims priority to the Chinese Patent Application, the entire content ofwhich is incorporated herein by reference.

### TECHNICAL FIELD

This application relates to the technical field of electronic expansion valves, and specifically, to an electronic expansion valve and an integrated valve, a heat management system, and a vehicle.

### BACKGROUND

When a valve port is blocked by a valve needle assembly in an electronic expansion valve in conventional technologies, liquid leakage occurs.

### SUMMARY

This application is intended to resolve at least one of the technical problems existing in conventional technologies. Therefore, this application provides an electronic expansion valve. In the electronic expansion valve, a first elastic member is disposed between a valve stem and a valve needle, so that the first elastic member exerts an acting force toward a valve port on the valve needle. In this way, when the valve needle blocks the valve port, an abutting force between the valve needle and a valve seat is increased, so that the valve needle can be closely attached to the valve seat to fully block the valve port, to facilitate reducing the possibility of internal leakage of the electronic expansion valve.

This application further provides an integrated valve with the electronic expansion valve, a heat management system, and a vehicle.

An electronic expansion valve according to an embodiment of a first aspect of this application includes: a valve seat, wherein the valve seat is provided with a valve port; a rotation assembly, wherein the rotation assembly rotates relative to the valve seat; a valve needle assembly, wherein the valve needle assembly includes a valve stem and a valve needle, the valve stem cooperating with the rotation assembly, to convert rotation of the rotation assembly into reciprocating motion of the valve stem, the valve stem does not rotate about an axial direction of the valve stem, and the valve needle being configured to open or block the valve port; and a first elastic member, wherein the first elastic member is separately connected to the valve stem and the valve needle, and the valve needle cooperates with the valve stem, so thatthe valve needle is driven by the valve stem to reciprocate; and when the valve needle blocks the valve port, the valve stem is capable of moving toward the valve port to compress the first elastic member to form a preloading force.

According to the electronic expansion valve according to this embodiment of this application, the first elastic member is disposed between the valve stem and the valve needle, so that the first elastic member exerts an acting force toward the valve port on the valve needle. In this way, when the valve needle blocks the valve port, an abutting force between the valve needle and the valve seat is increased, so that the valve needle can be closely attached to the valve seat to fully block the valve port, to facilitate reducing the possibility of internal leakage of the electronic expansion valve.

In addition, the electronic expansion valve according to the foregoing embodiment of this application may further have the following additional technical features.

According to some embodiments of this application, an accommodation cavity is provided in the valve needle, the first elastic member is mounted in the accommodation cavity, the first elastic member is separately connected to the valve stem and the valve needle to exert an acting force toward the valve port on the valve needle.

According to some embodiments of this application, a sleeve is further included, the sleeve is fastened to the valve seat, and the rotation rod assembly is rotatably disposed in the sleeve.

In some embodiments, a first fitting member is disposed in the sleeve, the rotation assembly and the first fitting member are relatively rotatable, and the rotation assembly cooperates with the first fitting member, to perform radial limiting on the rotation assembly.

In some examples, the rotation assembly is inserted into and cooperates with the first fitting member.

Further, an insertion groove is provided on an end face of the first fitting member that faces the rotation assembly, and the rotation assembly is inserted into the insertion groove.

According to some embodiments of this application, the rotation assembly includes: a conversion member, wherein the conversion member cooperates with the valve stem to convert rotation of the conversion member into reciprocating motion of the valve stem; and a rotor component, wherein the rotor component cooperates with a first end of the conversion member to drive the conversion member to rotate.

According to some optional embodiments of this application, the conversion member includes a first part disposed at the first end, the first part is a metal member, and the first part is welded to and cooperates with the rotor component.

In some embodiments, the conversion member further includes a second part, the second part is fastened to the first part, the second part is a resin member, and the second part threadedly cooperates with the valve stem.

According to some embodiments of this application, the valve seat is provided with a bearing component, a second end of the conversion member cooperates with the bearing component, and the second end is opposite to the first end.

According to some optional embodiments of this application, the conversion member includes a third part, the third part is a metal member, the third part is provided with a first support member, and the bearing component is supported on the first support member.

According to some specific embodiments of this application, a part of the third part is bent to form the first support.

According to some optional embodiments of this application, the electronic expansion valve further includes an anti-rotation member, the anti-rotation member is disposed on a side of the conversion member that faces the valve port, and the anti-rotation member cooperates with the valve needle assembly to limit a rotational degree of freedom of the valve needle assembly.

In some embodiments, the valve needle assembly further includes a guide sleeve, the guide sleeve is fastened to the valve stem, a cross section of the guide sleeve in a radial direction of the valve needle assembly is formed in a non-circular shape, and an outer circumferential wall of the guide sleeve is adapted to cooperate with the anti-rotation member to limit a rotational degree of freedom of the guide sleeve.

An embodiment of a second aspect of this application provides an integrated valve. The integrated valve includes: the electronic expansion valve according to the embodiment of the first aspect of this application; and a valve plate, wherein the valve plate is provided with an assembly cavity, a first flow path, and a second flow path, the first flow path communicating with the assembly cavity through a first opening, and the second flow path communicating with the assembly cavity through a second opening; and the electronic expansion valve being mounted in the assembly cavity, the valve port communicating with the second opening, and a flow path opening provided on the valve seat communicating with the first opening.

According to the integrated valve according to this embodiment of this application, the electronic expansion valve according to the embodiment of the first aspect of this application is used, and the first elastic member is disposed between the valve stem and the valve needle, so that the first elastic member exerts an acting force toward the valve port on the valve needle. In this way, when the valve needle blocks the valve port, an abutting force between the valve needle and the valve seat is increased, so that the valve needle can be closely attached to the valve seat to fully block the valve port, to facilitate reducing the possibility of internal leakage of the electronic expansion valve.

According to some optional embodiments of this application, a minimum flow area of the first opening is D1, a minimum flow area of the flow path opening is D2, a minimum flow area of the valve port is D3, a minimum flow area of the second opening is D4, and D4>D1>2D2>4D3 is satisfied.

An embodiment of a third aspect of this application provides a heat management system. The heat management system includes the electronic expansion valve according to the embodiment of the first aspect of this application or the integrated valve according to the embodiment of the second aspect of this application.

According to the heat management system according to this embodiment of this application, the electronic expansion valve according to the embodiment of the first aspect of this application or the integrated valve according to the embodiment of the second aspect of this application is used, and the first elastic member is disposed between the valve stem and the valve needle, so that the first elastic member exerts an acting force toward the valve port on the valve needle. In this way, when the valve needle blocks the valve port, an abutting force between the valve needle and the valve seat is increased, so that the valve needle can be closely attached to the valve seat to fully block the valve port, to facilitate reducing the possibility of internal leakage of the electronic expansion valve.

An embodiment of a fourth aspect of this application provides a vehicle. The vehicle includes the heat management system according to the embodiment of the third aspect of this application.

According to the vehicle according to this embodiment of this application, the heat management system according to the embodiment of the third aspect of this application is used, and the first elastic member is disposed between the valve stem and the valve needle, so that the first elastic member exerts an acting force toward the valve port on the valve needle. In this way, when the valve needle blocks the valve port, an abutting force between the valve needle and the valve seat is increased, so that the valve needle can be closely attached to the valve seat to fully block the valve port, to facilitate reducing the possibility of internal leakage of the electronic expansion valve.

Additional aspects and advantages of this application will be given in part in the following descriptions and in part will be obvious from the following descriptions, or will be learned from the practice of this application.

### BRIEF DESCRIPTION OF DRAWINGS

The above and/or additional aspects and advantages of this application will become apparent and readily understood from the descriptions of embodiments taken in conjunction with the following accompanying drawings.

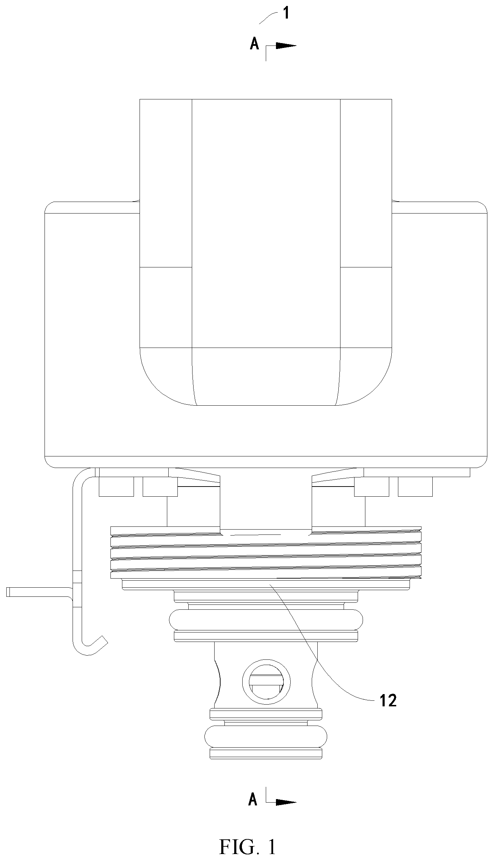

FIG. 1 is a diagram of a structure of an electronic expansion valve according to an embodiment of this application;
FIG. 2 is a cross-sectional view along A-A in FIG. 1;
FIG. 3 is a diagram of a structure of an electronic expansion valve according to an embodiment of this application;
FIG. 4 is a cross-sectional view of FIG. 3;
FIG. 5 is a diagram of a partial structure of an electronic expansion valve according to an embodiment of this application;
FIG. 6 is a cross-sectional view of FIG. 5;
FIG. 7 is a diagram of a partial structure of an electronic expansion valve according to an embodiment of this application;
FIG. 8 is a cross-sectional view along B-B in FIG. 7;
FIG. 9 is an enlarged view at a position G in FIG. 8;

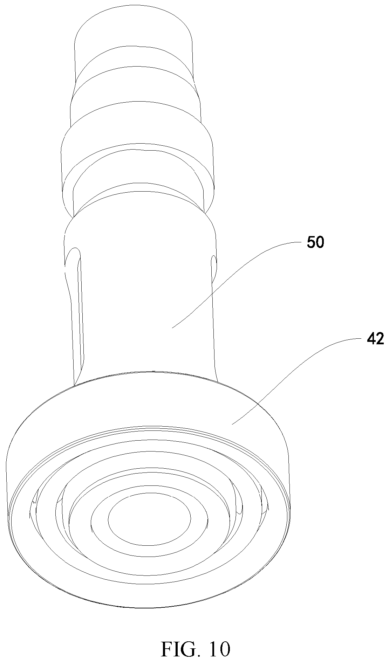

FIG. 10 is a diagram of structures of a conversion member and a bearing component according to an embodiment of this application;

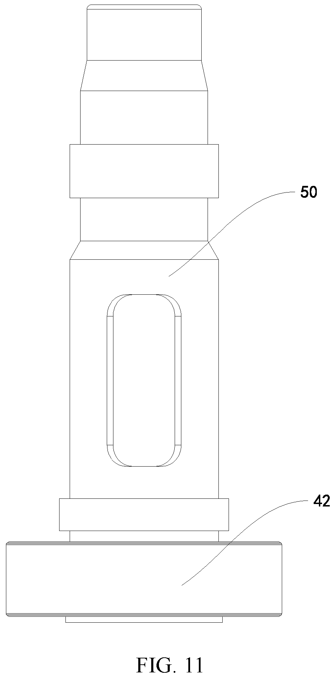

FIG. 11 is a diagram of structures of a conversion member and a bearing component according to an embodiment of this application;

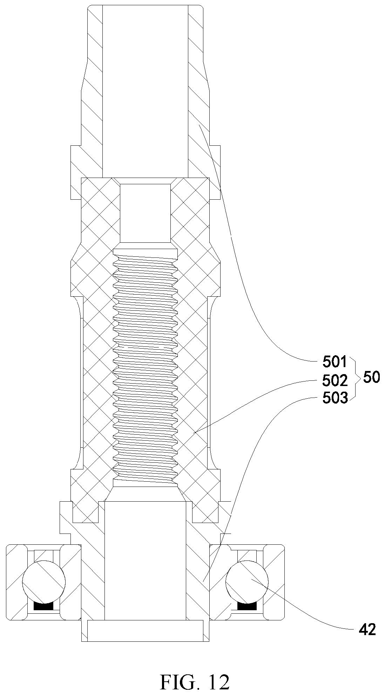

FIG. 12 is a cross-sectional view of structures of a conversion member and a bearing component according to an embodiment of this application;

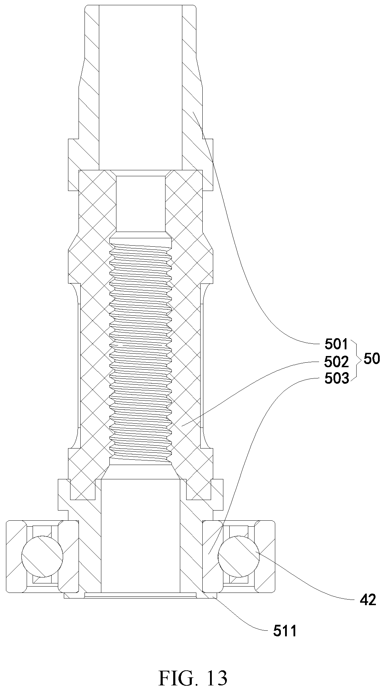

FIG. 13 is a cross-sectional view of structures of a conversion member and a bearing component according to an embodiment of this application, where an end portion ofthe conversion member forms a first support member in this case;

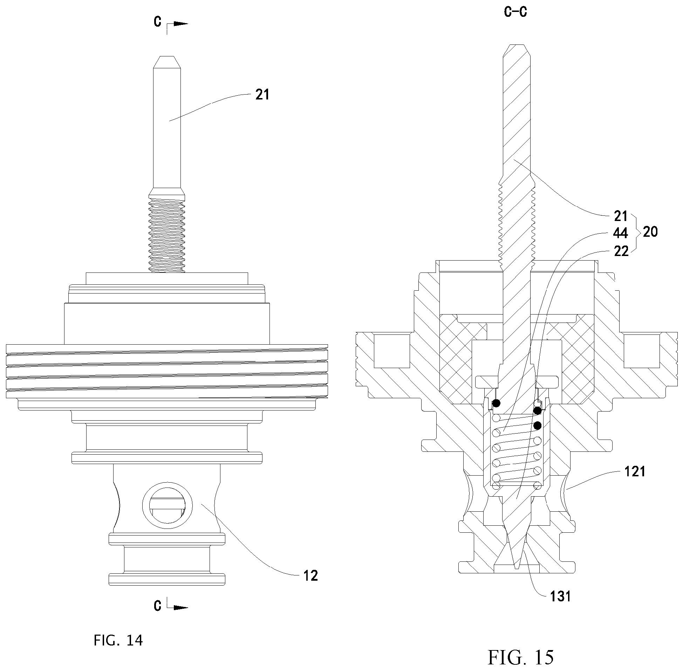

FIG. 14 is a diagram of a partial structure of an electronic expansion valve according to an embodiment of this application;
FIG. 15 is a cross-sectional view along C-C in FIG. 14;
FIG. 16 is a diagram of a partial structure of an electronic expansion valve according to an embodiment of this application;
FIG. 17 is a cross-sectional view along D-D in FIG. 16;

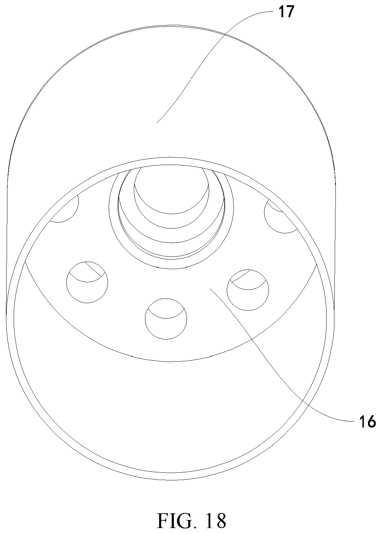

FIG. 18 is a diagram of structures of a sleeve and a first fitting member according to an embodiment of this application;
FIG. 19 is a cross-sectional view of FIG. 18;

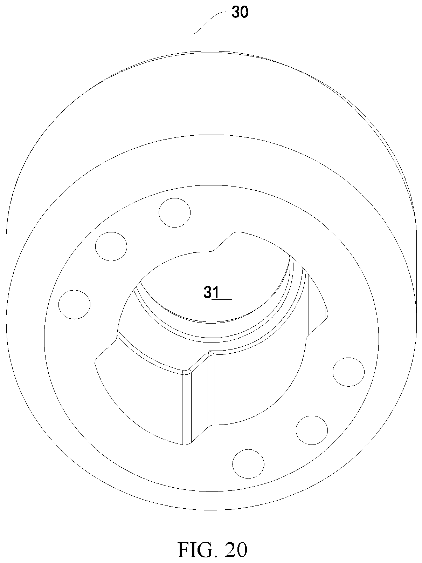

FIG. 20 is a diagram of a structure of an anti-rotation member according to an embodiment of this application;

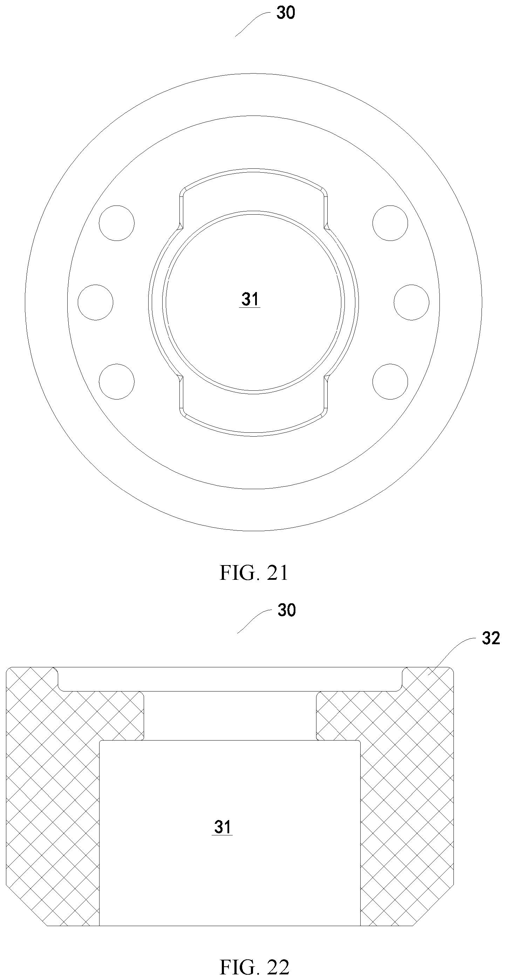

FIG. 21 is a diagram of a structure of an anti-rotation member according to an embodiment of this application;
FIG. 22 is a cross-sectional view of a structure of an anti-rotation member according to an embodiment of this application;
FIG. 23 is a diagram of a structure of a valve needle assembly according to an embodiment of this application;
FIG. 24 is a cross-sectional view of a structure of a valve needle assembly according to an embodiment of this application;
FIG. 25 is a diagram of a structure of a valve stem according to an embodiment of this application;

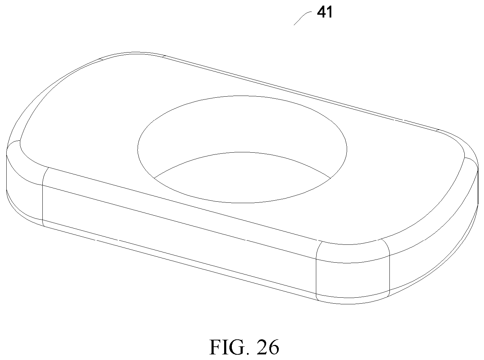

FIG. 26 is a diagram of a structure of a guide sleeve according to an embodiment of this application;

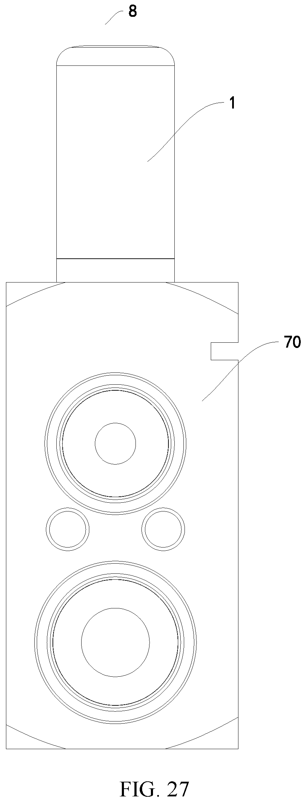

FIG. 27 is a diagram of structures of an electronic expansion valve and a valve plate according to an embodiment of this application;
FIG. 28 is a cross-sectional view of structures of an electronic expansion valve and a valve plate according to an embodiment of this application; and
FIG. 29 is a diagram of a structure of a vehicle according to an embodiment of this application.

Reference numerals: electronic expansion valve: 1;
second support member: 111; mounting cavity: 115;
valve seat: 12; flow path opening: 121; valve port: 131;
first fitting member: 16; insertion groove: 161; sleeve: 17; coil assembly: 19;
valve needle assembly: 20; valve stem: 21; guide slope: 211; first stepped surface: 212; first cylindrical portion: 213; second cylindrical portion: 214; second stepped surface: 215;
valve needle: 22; accommodation cavity: 221; valve sleeve: 23;
anti-rotation member: 30; cavity: 31; protrusion portion: 32; guide sleeve: 41; bearing component: 42; first elastic member: 44;
conversion member: 50; first part: 501; second part: 502; third part: 503; first support member: 511; first abutting portion: 515;
rotor component: 60; connection portion: 61;
valve plate: 70; first flow path: 71; second flow path: 72; assembly cavity: 73;
integrated valve: 8; vehicle: 91; heat management system: 92.

### DESCRIPTION OF EMBODIMENTS

Embodiments of this application are described in detail below. Examples of embodiments are shown in the accompanying drawings. Same or similar reference signs always indicate same or similar elements or elements with same or similar functions. Embodiments described below with reference to the accompanying drawings are examples, and are intended to be used to explain this application, and will not be understood as a limitation on this application.

In the descriptions of this application, it will be understood that orientation or position relationships indicated by terms "center", "longitudinal", "horizontal", "vertical", "width", "thickness", "top", "bottom", "inner", "outer", and the like are orientation or position relationships based on the accompanying drawings, and are merely intended for ease of describing this application and simplifying the descriptions, but are not intended to indicate or imply that a specified apparatus or element needs to have a specific orientation or be constructed and operated in a specific orientation. Therefore, this will not be understood as a limitation on this application.

In addition, the terms "first" and "second" are merely intended for a purpose of description, and will not be understood as an indication or implication of relative importance or an implicit indication of a quantity of indicated technical features. Therefore, a feature limited by "first" or "second" may explicitly or implicitly include one or more features. In the descriptions of this application, "a plurality of" means at least two, for example, two or three, unless otherwise clearly limited.

In this application, unless otherwise specified and limited, the terms "mount", "connected", "connect", "fasten" and the like will be understood in a broad sense. For example, the terms may indicate a fixed connection, a detachable connection, or integration; may indicate a mechanical connection, an electrical connection, or mutual communication; or may indicate a direct interconnection, an indirect interconnection through an intermediate medium, internal communication between two elements, or an interaction relationship between two elements. A person of ordinary skill in the art will understand specific meanings of the foregoing terms in this application based on specific situations.

In this application, unless otherwise clearly specified and limited, that a first feature is "above" or "below" a second feature may include that the first feature is in direct contact with the second feature, or may include that the first feature is not in direct contact with the second feature but is in contact with the second feature through another feature between the first feature and the second feature. Further, that the first feature is "above", "over", and "beyond" the second feature includes that the first feature is right above and obliquely above the second feature, or merely indicates that the first feature is horizontally higher than the second feature.

An electronic expansion valve 1 according to an embodiment of this application is described below with reference to the accompanying drawings.

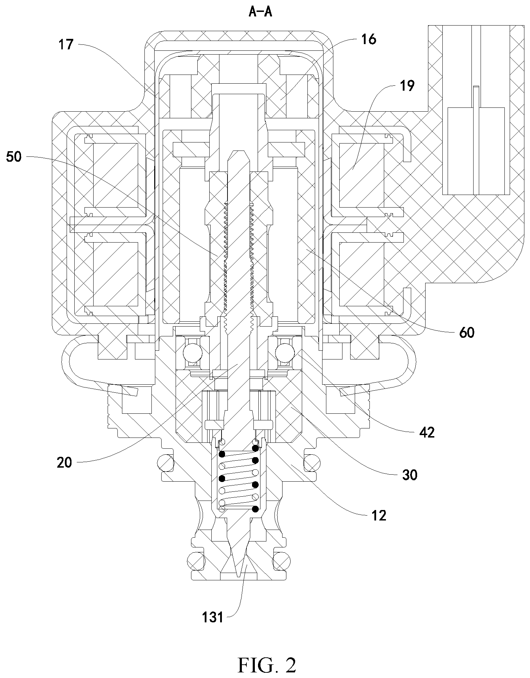

As shown in FIG. 2 and FIG. 23 to FIG. 25, the electronic expansion valve 1 according to this embodiment of this application includes a valve seat 12, a rotation assembly, a valve needle assembly 20, and a first elastic member 44.

The valve seat 12 is provided with a valve port 131, the rotation assembly rotates relative to the valve seat 12, and the valve needle assembly20 includes a valve stem 21 and a valve needle 22. The valve stem 21 cooperates with the rotation assembly, to convert rotation of the rotation assembly into reciprocating motion of the valve stem 21. The first elastic member 44 is separately connected to the valve stem 21 and the valve needle 22. The valve needle 22 cooperates with the valve stem 21, so that the valve needle 22 is driven by the valve stem 21 to reciprocate. The valve stem 21 does not rotate about an axial direction of the valve stem 21, and the valve needle 22 can open or block the valve port 131 when the valve needle 22 reciprocates.

When the valve needle 22 blocks the valve port 131, the valve stem 21 may move toward the valve port 131 to compress the first elastic member 44 to form a preloading force. In this case, the first elastic member 44 has an acting force toward the valve port 131 on the valve needle 22. Further, an abutting force between the valve needle 22 and the valve seat 12 can be increased, so that the valve needle 22 can fully block the valve port 131, and the possibility that liquid leakage occurs at the valve port 131 when the valve port 131 is blocked by the electronic expansion valve 1 can be reduced, to facilitate improving a qualification rate of the electronic expansion valve 1.

In conventional technologies, a valve stem is driven by a rotor to rotate about the axial direction of the valve stem, and the valve stem cooperates with a nut to convert rotation of the valve stem into reciprocating motion of the valve stem, to convert reciprocating motion of the valve stem into reciprocating motion of the valve needle. Because the valve stem is connected to the valve needle, rotation of the valve stem causes the valve needle to have at least a trend of rotating, which causes friction between the valve needle and the valve port to increase, resulting in the possibility of liquid leakage. In addition, wear of the valve needle reduces a service life of the valve needle. However, in this application, the valve stem 21 does not rotate about the axial direction. In this case, occurrence of the foregoing problemis avoided, and the possibility of liquid leakage of the electronic expansion valve 1 is further reduced.

According to the electronic expansion valve 1 according to this embodiment of this application, the first elastic member 44 is disposed between the valve stem 21 and the valve needle 22, so that the first elastic member 44 exerts the acting force toward the valve port 131 on the valve needle 22. In this way, when the valve needle 22 blocks the valve port 131, the abutting force between the valve needle 22 and the valve seat 12 is increased, so that the valve needle 22 can be closely attached to the valve seat 12 to fully block the valve port 131, to facilitate reducing the possibility of internal leakage of the electronic expansion valve 1.

An electronic expansion valve 1 according to a specific embodiment of this application is described below with reference to the accompanying drawings.

As shown in FIG. 2 and FIG. 23 to FIG. 25, the electronic expansion valve 1 according to this embodiment of this application includes a valve seat 12, a rotation assembly, a valve needle assembly 20, and a first elastic member 44.

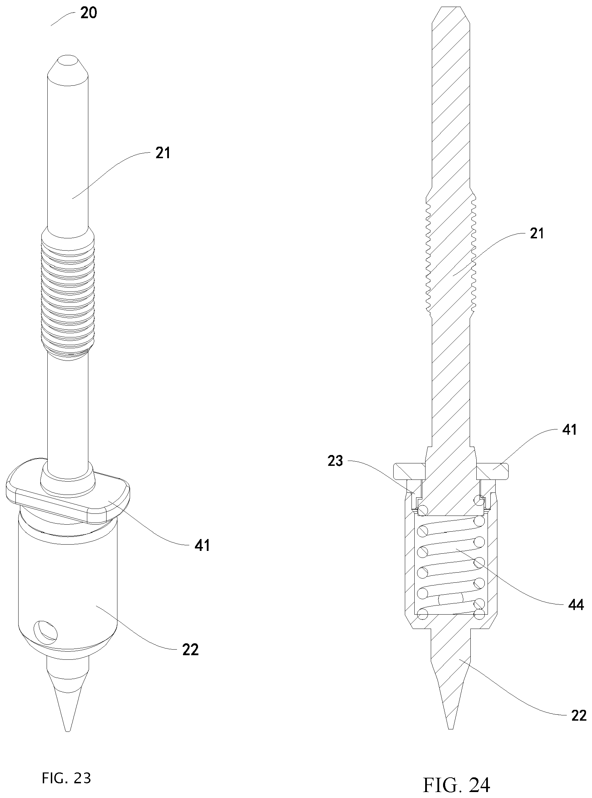

In some embodiments of this application, as shown in FIG. 24, an accommodation cavity 221 is provided in a valve needle 22, and the first elastic member 44 is disposed in the accommodation cavity 221. The first elastic member 44 is separately connected to a valve stem 21 and the valve needle 22 to exert an acting force toward a valve port 131 on the valve needle 22.

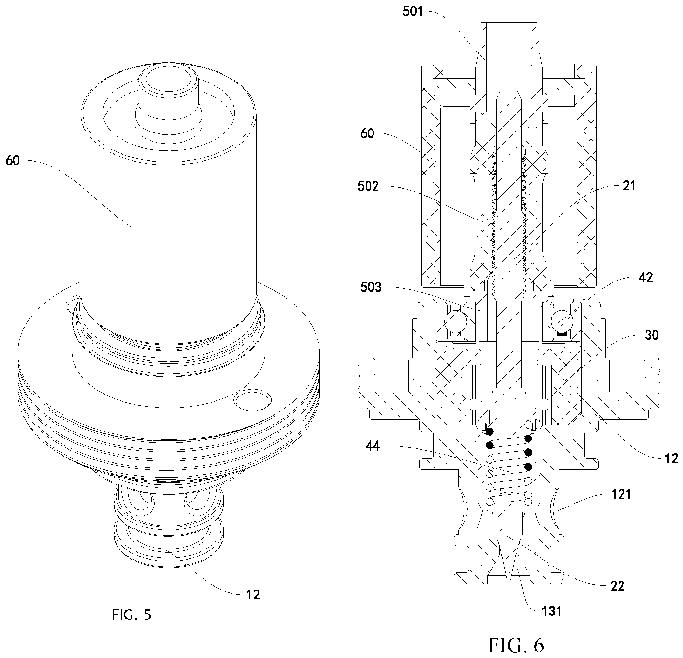

In some embodiments, as shown in FIG. 6, the first elastic member 44 extends in an up-down direction (it will be understood herein that the foregoing direction limitation is only for ease of description of the accompanying drawings, and does not limit an actual arrangement position and direction of the electronic expansion valve 1.) When the valve needle 22 blocks the valve port 131, the first elastic member 44 has a downward acting force on the valve needle 22, so that the valve needle 22 can fully block the valve port 131, to avoid liquid leakage when the electronic expansion valve 1 blocks the valve port 131, and facilitate improving a qualification rate of the electronic expansion valve 1.

In some embodiments of this application, the electronic expansion valve 1 further includes a sleeve 17. The sleeve 17 is fastened to the valve seat 12. The rotation assembly is rotatably disposed in the sleeve 17 to provide a relatively closed environment for the rotation assembly by using the sleeve 17, so that the rotation assembly can stably rotate in the sleeve 17. This avoids impact of an object in an external environment on rotation of the rotation assembly.

In some optional embodiments of this application, a first fitting member 16 is disposed in the sleeve 17, the rotation assembly and the first fitting member 16 are relatively rotatable, and the rotation assembly cooperates with the first fitting member 16, to perform radial limiting on the rotation assembly, so that rotation of the rotation assembly can be supported, it is convenient to reduce vibration of the rotation assembly in a radial direction, and therefore the rotation assembly can stably rotate in the sleeve 17.

Specifically, because the rotation assembly has a specific length, when the rotation assembly rotates, the rotation assembly easily vibrates in the radial direction of the rotation assembly. The rotation assembly cooperates with the first fitting member 16, and the first fitting member 16 is used to support rotation of the rotation assembly. In this way, when the first fitting member 16 rotates, a vibration amplitude of the first fitting member 16 can be reduced, thereby improving stability of rotation of the first fitting member 16, and reducing the possibility of collision between the first fitting member 16 and the sleeve 17.

As shown in FIG. 2, in this embodiment, the sleeve 17 is fastened to the valve seat 12, the sleeve 17 and the valve seat 12 jointly define an accommodating cavity, the rotation assembly is rotatably disposed in the accommodating cavity, and the first fitting member 16 is disposed in the sleeve 17 and rotatably cooperates with the rotation assembly.

In some specific embodiments of this application, the rotation assembly is inserted into and rotatably cooperates with the first fitting member 16, so that when the rotation assembly rotates, the first fitting member 16 can support the rotation assembly, and the rotation assembly can stably rotate. In addition, the first fitting member 16 does not interfere with rotation of the rotation assembly, so that the rotation assembly can smoothly drive the valve stem 21 to reciprocate.

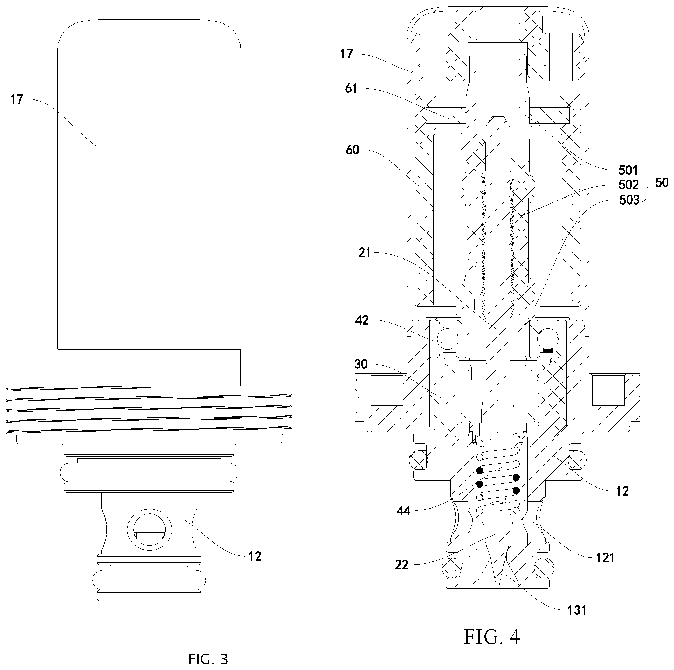

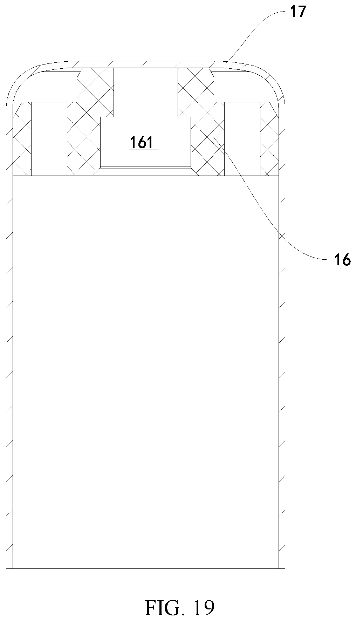

In some specific embodiments of this application, as shown in FIG. 4 and FIG. 19, an insertion groove 161 is provided on an end face ofthe first fitting member 16 that faces the rotation assembly, and the rotation assembly is inserted into the insertion groove 161. When the rotation assembly rotates, a side wall of the insertion groove 161 supports rotation ofthe rotation assembly. In this way, when the rotation assembly rotates, a vibration amplitude of an end portion of the rotation assembly is reduced, so that the rotation assembly can stably rotate, a safe distance can be maintained between the rotation assembly and the sleeve 17, and the possibility of collision between the rotation assembly and the sleeve 17 can be reduced.

Specifically, if a length of the rotation assembly is long, when the rotation assembly rotates, the vibration amplitude ofthe end portion ofthe rotation assembly is large. The end portion of the rotation assembly is inserted into the insertion groove 161, so that the end portion of the rotation assembly is supported, to facilitate reducing the vibration amplitude of the end portion of the rotation assembly, improving stability of rotation of the rotation assembly, and reducing the possibility that the rotation assembly collides with the sleeve 17 when rotating.

In some embodiments of this application, as shown in FIG. 2, the rotation assembly includes a conversion member 50 and a rotor component 60. The rotor component 60 cooperates with a first end of the conversion member 50 to drive the conversion member 50 to rotate. The conversion member 50 cooperates with the valve stem 21, to convert rotation of the conversion member 50 into reciprocating motion of the valve stem 21, and the valve needle 22 can open or close the valve port 121 when the valve stem 21 is capable of driving the valve needle 22 to reciprocate.

Because the rotor component 60 drives the conversion member 50 to rotate, and the conversion member 50 only rotates without displacement, the rotor component 60 only rotates without displacement. In this way, axial relative positions of the rotor component 60 and an external coil remain unchanged, the coil can always provide a maximum driving force for the rotor component 60, and therefore a valve opening capability of the electronic expansion valve is improved.

In some embodiments, one of the rotor component 60 and the conversion member 50 is inserted into and rotatably cooperates with the first fitting member 16 or both the rotor component 60 and the conversion member 50 are inserted into and rotatably cooperate with the first fitting member 16, so that the possibility of vibration of the rotor component 60 and the conversion member 50 in respective radial directions is reduced, and stable rotation of the rotor component 60 and the conversion member 50 is ensured.

Because the conversion member 50 cooperates with the valve stem 21, the possibility of vibration of the valve stem 21 and the valve needle 22 in respective radial directions can be reduced through reduction of the possibility of vibration of the conversion member 50 in the radial direction of the conversion member 50. In this way, when the valve needle 22 opens or closes the valve port 131, the coaxiality between the valve needle 22 and the valve port 131 is ensured, so that the valve needle 22 can completely block the valve port 11, thereby reducing the possibility of liquid leakage of the electronic expansion valve 1, and improving cooperation stability of the conversion member 50 and the valve stem 21.

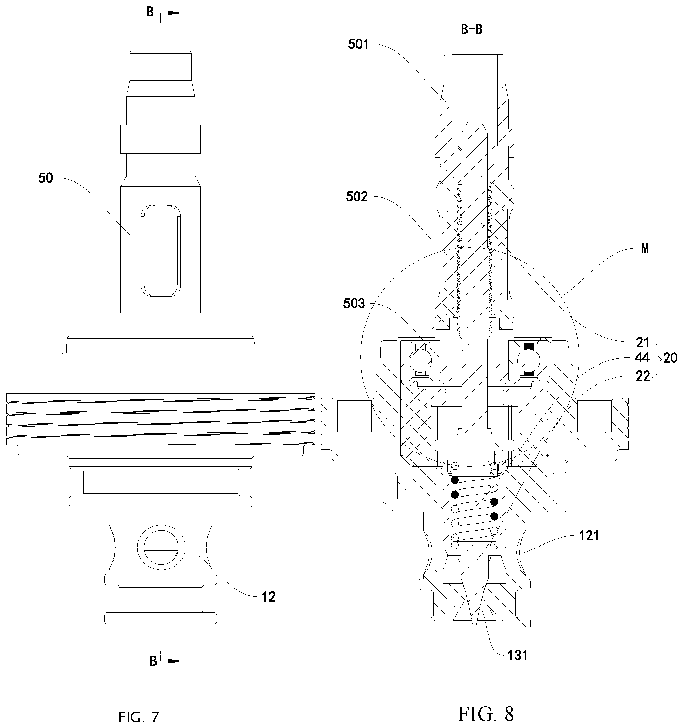

In some optional embodiments of this application, as shown in FIG. 4 and FIG. 8, the conversion member 50 includes a first part 501. The first part 501 is a metal member. The first part 501 is welded to and cooperates with the rotor component 60 to implement a connection between the conversion member 50 and the rotor component 60, so that when the rotor component 60 rotates, the rotor component 60 can drive the conversion member 50 to rotate.

As shown in FIG. 4, in this embodiment, the rotor component 60 includes a connection portion 61. The connection portion 61 is a metal member. The connection portion 61 is welded to the first part 501, to fasten the rotor component 60 to the conversion member 50 through welding. In this way, when the rotor component 60 rotates, the rotor component 60 can smoothly drive the conversion member 50 to rotate, and when the conversion member 50 rotates, the conversion member 50 can drive the valve needle assembly 20 to reciprocate, so that the valve needle assembly 20 can open or block the valve port 131.

The rotor component 60 and the conversion member 50 are fastened together through welding, and no additional component is required to fasten the conversion member 50 to the rotor component 60, so that a quantity of components in the electronic expansion valve 1 can be reduced, and complexity of the components in the electronic expansion valve 1 can be reduced.

In some optional embodiments of this application, as shown in FIG. 4 and FIG. 8, the conversion member 50 further includes a second part 502. The second part 502 is fastened to the first part 501, the second part 502 is a resin member, and the second part 502 threadedly cooperates with the valve needle 21. In this way, a weight of the conversion member 50 can be reduced while cooperation of the conversion member 50 and the second part 502 is realized.

The second part 502 is the resin member, and the resin member has characteristics of lubrication and wear resistance, so that friction between the second part 502 and the valve stem 21 can be reduced when the conversion member 50 rotates. In some embodiments, an internal thread is disposed in the second part 502, the valve stem 21 has an external thread, and the second part 502 threadedly cooperates with the valve stem 21. When the second part 502 rotates to drive the valve stem 21 to reciprocate, the resin member can lubricate the internal and external threads to ensure that the second part 502 can smoothly drive the valve stem 21 to reciprocate.

In some embodiments, the first part 501 and the second part 502 on the conversion member 50 are formed through separate processing, so that the first part 501 and the second part 502 are made of different materials according to a requirement. Specifically, the first part 501 is formed as the metal member, so that first part 501 can be welded to the rotor component 60, to be driven to rotate by the rotor component 60; and the second part 502 is the resin member, and the second part 502 threadedly cooperates with the valve needle assembly 20, to convert rotation of the conversion member 50 into reciprocating motion of the valve needle assembly 20, allowing the valve needle assembly 20 to smoothly open or block the valve port 131.

In some optional embodiments of this application, the valve seat 12 is provided with a bearing component 42. A second end of the conversion member 50 cooperates with the bearing component 42, so that the bearing component 42 is used to support rotation of the conversion member 50 and limit a position of the conversion member 50, and the conversion member 50 can smoothly rotate to drive the valve stem 21 to reciprocate.

In some embodiments, as shown in FIG. 2, the electronic expansion valve 1 further includes a coil assembly 19. The coil assembly 19 is coupled to the rotor component 60, and can drive, after the coil assembly 19 is powered on, the rotor component 60 to rotate. The rotor component 60 drives the conversion member 50 to rotate by using the first part 501. Because the second end of the conversion member 50 cooperates with the bearing component 42, and the conversion member 50 threadedly cooperates with the valve stem 21, the conversion member 50 can drive, when the conversion member 50 rotates, the valve stem 21 to reciprocate, allowing the valve needle 22 to open or block the valve port 131.

When the valve stem 21 and the valve needle 22 reciprocate, because an end of the conversion member 50 cooperates with the bearing component42, the conversion member 50 does not reciprocate with the valve stem 21, and the rotor component 60 does not reciprocate with the valve stem 21 either, to ensure that the rotor component 60 does not move in an up-down direction relative to the coil assembly 19. This ensures cooperation between the rotor component 60 and the coil assembly 19, and the coil assembly 19 can smoothly and stably drive the rotor component 60 to rotate.

In some embodiments, the first end of the conversion member 50 is inserted into and rotatably cooperates with the first fitting member 16, and the second end of the conversion member 50 cooperates with the bearing component42. When the rotor component 60 drives the conversion member 50 to rotate, the first fitting member 16 supports the first end of the conversion member 50, and the bearing component 42 supports the second end of the conversion member 50, so that the conversion member 50 can smoothly rotate. When the rotor component 60 drives the conversion member 50 to rotate, supporting an end portion of the conversion member 50 can reduce a vibration amplitude of the conversion member 50 during rotation. This can improve stability of rotation of the conversion member 50, improve stability of rotation of the rotor component 60, and reduce the possibility of collision between the rotor component 60 and the sleeve 17.

Specifically, because the conversion member 50 has a specific length, when the rotor component 60 drives the conversion member 50 to rotate, the end portion of the conversion member 50 is prone to vibration. The first end of the conversion member 50 is inserted into and rotatably cooperates with the first fitting member 16, so that the first fitting member 16 can support the first end of the conversion member 50, and therefore a vibration amplitude of the first end of the conversion member 50 can be reduced when the conversion member 50 rotates. The second end of the conversion member 50 cooperates with the bearing component 42, so that the bearing component 42 can support the second end of the conversion member 50 when the conversion member 50 rotates, and therefore, a vibration amplitude of the second end of the conversion member 50 can be reduced when the conversion member 50 rotates, and stability of rotation of the conversion member 50 can be improved.

Specifically, because the conversion member 50 fixedly cooperates with the rotor component 60, when the conversion member 50 vibrates, the conversion member 50 drives the rotor component 60 to vibrate, and the rotor component 60 easily collides with the sleeve 17 when the rotor component 60 vibrates. Therefore, reducing the vibration amplitude of the converter 50 can reduce a vibration amplitude of the rotor component 60, so that a safe distance can be maintained between the rotor component 60 and the sleeve 17, to reduce the possibility of collision between the rotor component 60 and the sleeve 17 when the rotor component 60 rotates. This facilitates prolonging service lives of the rotor component 60 and the sleeve 17, and reduces noise generated in the electronic expansion valve 1.

In addition, because the conversion member 50 cooperates with the valve stem 21, the possibility of vibration of the valve stem 21 and the valve needle 22 in the respective radial directions can be reduced through reduction of the possibility of vibration of the conversion member 50 in the radial direction ofthe conversion member 50. In this way, when the valve needle 22 opens or closes the valve port 131, the coaxiality between the valve needle 22 and the valve port 131 is ensured, so that the valve needle 22 can completely block the valve port 11, thereby reducing the possibility of liquid leakage of the electronic expansion valve 1.

In some optional embodiments of this application, as shown in FIG. 4 and FIG. 8, the conversion member 50 includes a third part 503. The third part 503 is a metal member. The third part 503 is provided with a first support member 511. The bearing component 42 is supported on the first support member 511, so that cooperation of the bearing component 42 and the conversion member 50 is realized by the first support member 511, and the bearing component 42 can support the third part 503 to support the conversion member 50. An end portion of the conversion member 50 is supported, so that stability of rotation of the conversion member 50 can be improved, stability of rotation of the rotor component 60 can be improved, and the possibility of collision between the rotor component 60 and the sleeve 17 can be reduced.

In some specific embodiments of this application, a part of the third part 503 is bent to form the first support member 511, and such arrangement facilitates mounting of the bearing component 42 to the conversion member 50. Specifically, after the bearing component 42 is sleeved on the conversion member 50 from an end portion of the third part 503, the end portion of the third part 503 is bent, so that the first support member 511 is in contact and cooperates with the bearing component42, to implement a cooperation connection between the bearing component 42 and the conversion member 50.

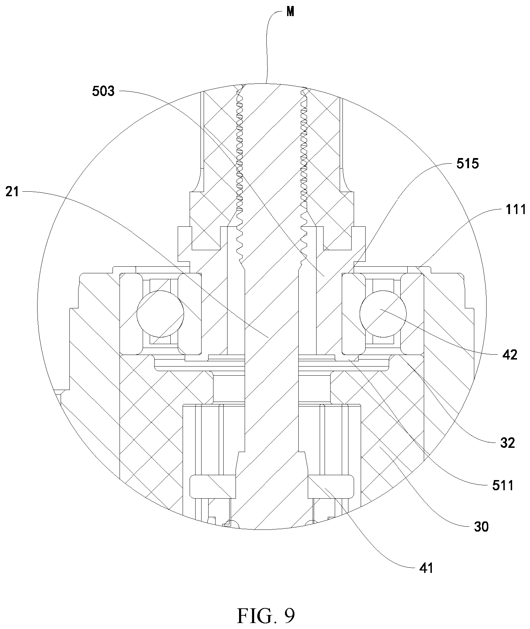

In some embodiments, as shown in FIG. 8 and FIG. 9, a first abutting portion 515 is disposed on the conversion member 50,and the bearing component 42 is sleeved on the conversion member 50 from a lower end of the conversion member 50. After an upper end of an inner ring of the bearing component 42 cooperates with the first abutting portion 515 in an abutting manner, a lower end of the third part 503 is bent, so that the first support member 11 cooperates with a lower end of an inner ring of the conversion member 50 in an abutting manner, to mount the bearing component 42 on the conversion member 50. When the conversion member 50 rotates, the conversion member 50 drives the inner ring of the bearing component 42 to rotate. In this case, the bearing component 42 can support the second end of the conversion member 50.

In some examples, as shown in FIG. 8 and FIG. 9, a side of the valve seat 12 that faces away from the valve port 131 is a metal member, and a second support member 111 can be formed by bending the side of the valve seat 12. The second support member 111 is in contact and cooperates with an end of the bearing component 42 that faces away from the valve port 131, and the second support member 111 cooperates with an outer ring of the bearing component 42. The first support member 511 cooperates with a side of the bearing component 42 that faces the valve port 131, and the first support member 511 cooperates with the innerring ofthe bearing component 42.

In other words, the bearing component 42 is sandwiched between the first support member 511 and the second support member 111, and the bearing component 42 is fastened to the valve seat 12. When the conversion member 50 rotates, the conversion member 50 drives the inner ring ofthe bearing component42 to rotate. At the same time, the bearing component 42 can support rotation of the conversion member 50, thereby improving stability of rotation of the conversion member 50.

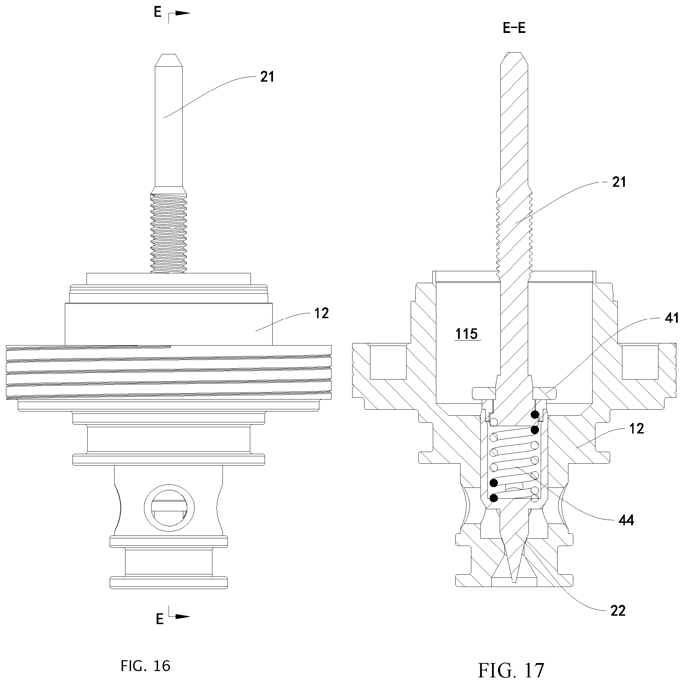

In some examples, as shown in FIG. 8, FIG. 9, and FIG. 17, the valve seat 12 defines a mounting cavity 115, and an anti-rotation member 30 is disposed in the mounting cavity 115. The anti-rotation member 30 cooperates with the valve needle assembly 20 to limit a rotational degree of freedom of the valve needle assembly 20, so that the valve needle assembly 20 can only reciprocate and cannot rotate, and wear between the valve needle assembly 20 and the valve seat 12 can be reduced when the valve needle assembly 20 opens or blocks the valve port 131.

Specifically, both the anti-rotation member 30 and the bearing component 42 are disposed in the mounting cavity 115, the bearing component 42 is disposed on a side of the anti-rotation member 30 that faces away from the valve port 131, that is, above the anti-rotation member 30, and the bearing component 42 is sleeved on the conversion member 50. The conversion member 50 is provided with the first abutting portion 515 and the first support member 511 that are spaced apart in the up-down direction, and a side of the anti-rotation member 30 that faces the bearing component 42 has a protrusion portion 32.

The upper end of the inner ring of the bearing component 42 abuts against the first abutting portion 515, and a lower end of the inner ring of the bearing component 42 cooperates with the first support member 511, to fasten the bearing component 42 and the conversion member 50 together. An upper endofthe outerring of the bearing component42 cooperates with the second support member 111, and a lower end of the outer ring of the bearing component 42 cooperates with the protrusion portion 32 in an abutting manner, to fasten the outer ring of the bearing component 42 in the mounting cavity 115. In this way, when the valve needle assembly 20 reciprocates, the valve needle assembly 20 does not drive the conversion member 50 to reciprocate together.

Specifically, when the bearing component 42 is mounted, the bearing component 42 is first sleeved on the conversion member 50, so that the upper end of the inner ring of the bearing component 42 cooperates with the first abutting portion 515 in an abutting manner; the third part 503 is bent, so that the first support member 511 cooperates with the lower end of the inner ring of the bearing component 42; the bearing component 42 is disposed in the mounting cavity 115, so that the lower end of the outer ring of the bearing component 42 cooperates with the protrusion portion 32 in an abutting manner; and then an end portion of the valve seat 12 is bent, so that the second support member 111 cooperates with the upper end of the outer ring of the bearing component 42 in an abutting manner. In this case, the anti-rotation member 30 and the second support member 111 limit a position of the bearing component 42 in the up-down direction, to avoid movement of the bearing component 42 in the up-down direction with the valve needle assembly 20. Therefore, the bearing component 42 can stably support rotation of the conversion member 50.

When the lower end of the outer ring of the bearing component 42 cooperates with the protrusion portion 32 of the anti-rotation member 30 in an abutting manner, and the valve seat 12 is bent, so that the second support member 111 cooperates with the upper end of the outer ring of the bearing component 42 in an abutting manner, the second support member 111 has a downward pressing force on the bearing component 42. In this case, the bearing component 42 has a downward pressing force on the anti-rotation member 30, so that a lower end of the anti-rotation member 30 cooperates with a bottom wall of the mounting cavity 115, and a position of the anti-rotation member 30 in the mounting cavity 115 is limited, to fasten the anti-rotation member 30 in the mounting cavity 115, and avoid rotation of the anti-rotation member 30 in the mounting cavity 115. In this way, stable cooperation of the anti-rotation member 30 and the valve needle assembly 20 is ensured, and the anti-rotation member 30 can limit rotation of the valve needle assembly 20.

In some embodiments of this application, as shown in FIG. 6, the electronic expansion valve 1 further includes the anti-rotation member 30. The anti-rotation member 30 is disposed on a side of the conversion member 50 that faces the valve port 131. The anti-rotation member 30 cooperates with the valve needle assembly 20 to limit the rotational degree of freedom ofthe valve needle assembly 20. When the conversion member 50 rotates, the valve needle assembly 20 can only move and cannot rotate, so that when the valve needle assembly 20 opens or blocks the valve port 131, friction between the valve needle assembly 20 and the valve seat 12 can be reduced, noise generated in the electronic expansion valve 1 can be reduced, a degree of mutual wear between the valve needle assembly 20 and the valve seat 12 can be reduced, and service life of the valve needle assembly 20 and service life of the electronic expansion valve 1 can be prolonged.

In some embodiments, the anti-rotation member 30 cooperates with the valve stem 21, to limit a rotational degree of freedom of the valve stem 21, so that the valve stem 21 can only reciprocate and cannot rotate. In this way, the valve stem 21 only drives the valve needle 22 to reciprocate and does not drive the valve needle 22 to rotate, to facilitate reducing wear between the valve needle 22 and the valve port 121 when the valve needle 22 opens or closes the valve port 121.

In some other embodiments, the anti-rotation member 30 cooperates with the valve needle 22. In this way, even if the valve stem 21 rotates, the valve needle 22 only reciprocates and does not rotate under a limitation of the anti-rotation member 30. This facilitates reducing wear between the valve needle 22 and the valve port 121 when the valve needle 22 opens or closes the valve port 121.

In some optional embodiments ofthis application, the valve needle assembly 20 further includes a guide sleeve 41. The guide sleeve 41 is fastened to the valve stem 21. A cross section of the guide sleeve 41 in a radial direction of the valve needle assembly 20 is formed in a non-circular shape. An outer circumferential wall of the guide sleeve 41 is adapted to cooperate with the anti-rotation member 30 to limit a rotational degree of freedom of the guide sleeve 41, thereby limiting rotation of the valve needle assembly 20. In this way, the valve needle assembly 20 can only move and cannot rotate, so that when the valve needle assembly 20 opens or blocks the valve port 131, friction between the valve needle assembly 20 and the valve seat 12 can be reduced.

In some embodiments, the anti-rotation member 30 defines a cavity 31. A radial cross-section of the cavity 31 is formed in a non-circular shape, and the guide sleeve 41 is formed in a shape adapted to the cavity 31. When the valve needle assembly 20 has a trend to rotate, an inner circumferential wall of the cavity 31 has a rotation stop force on the guide sleeve 41, to limit the rotational degree of freedom of the valve needle assembly 20.

In some examples, the anti-rotation member 30 and the valve seat 12 are an integrated part, which facilitates reducing mounting steps of fastening the anti-rotation member 30 to the valve seat 12, and rotation of the valve needle assembly 20 is limited through cooperation of the anti-rotation member 30 and the guide sleeve 41.

In some examples, the guide sleeve 41 and the valve needle assembly 20 are an integrated part, which reduces mounting steps of fastening the guide sleeve 41 to the valve needle assembly 20, and rotation of a part of the valve needle assembly 20 that cooperates with the valve port 121 is limited through cooperation of the anti-rotation member 30 and the guide sleeve 41.

In some embodiments, the outer circumferential wall of the guide sleeve 41 is formed in an oblong shape, the anti-rotation member 30 defines the cavity 31, and at least a part of an inner wall of the cavity 31 in the anti-rotation member 30 is formed in an oblong shape to cooperate with the guide sleeve 41 in a rotation stop manner. When the guide sleeve 41 has a tendency to rotate, the inner wall of the cavity 31 has a rotation stop force on the outer circumferential wall of the guide sleeve 41, to limit rotation of the guide sleeve 41, so that the guide sleeve 41 can only reciprocate in the cavity 31 and cannot rotate, and the valve stem 21 and the valve needle 22 can only reciprocate and cannot rotate. In this way, friction between the valve needle 22 and the valve seat 12 can be reduced when the valve stem 21 and the valve needle 22 reciprocate to open or block the valve port 131, thereby reducing wear between the valve needle 22 and the valve seat 12.

In some embodiments, the inner wall of the cavity 31 slidably cooperates with the outer circumferential wall of the guide sleeve 41. When the valve stem 21 and the valve needle 22 reciprocate, the inner wall of the cavity 31 can guide a moving direction of the guide sleeve 41, so that the guide sleeve 41 can smoothly reciprocate in the cavity 31, and the valve needle 22 can smoothly open or block the valve port 131.

In some examples, the outer circumferential wall of the guide sleeve 41 may be formed in a triangular shape, a square shape, a hexagon shape, or the like, and the at least a part of the inner wall ofthe cavity 31 in the anti-rotation member 30 is correspondingly formed in a triangular shape, a square shape, a hexagon shape, or the like, to cooperate with the guide sleeve 41 in a rotation stop manner.

In some other examples, one of a guide groove and a guide protrusion is disposed on the outer circumferential wall of the guide sleeve 41, and the other of the guide protrusion and the guide groove is disposed on the inner wall of the cavity 31. The guide protrusion extends into the guide groove and can slide in the guide groove, to guide the moving direction of the guide sleeve 41 through cooperation of the guide protrusion and the guide groove, and when the guide sleeve 41 has a trend to rotate, rotation of the guide sleeve 41 is limited through cooperation of the guide protrusion and the guide groove, to limit rotation of the valve stem 21 and the valve needle 22.

For example, a guide groove is provided on the outer circumferential wall of the guide sleeve 41, a guide protrusion is disposed on the inner wall of the cavity 31, and both the guide groove and the guide protrusion extend in the up-down direction. When the valve stem 21 and the valve needle 22 move in the up-down direction, the guide groove slides in the up-down direction, and the guide protrusion slides in the guide groove in the up-down direction, to limit the moving direction of the guide sleeve 41, and further limit moving directions of the valve stem 21 and the valve needle 22. In this way, the valve stem 21 and the valve needle 22 can smoothly reciprocate in the up-down direction, and therefore the valve needle 22 can smoothly open or block the valve port 131.

In addition, when the valve stem 21 and the valve needle 22 have a trend to rotate, because the guide protrusion extends into the guide groove and the anti-rotation member 30 is fastened to the valve seat 12, a side wall of the guide groove has a rotation stop force on the guide protrusion, to limit rotation of the guide sleeve 41, so that the guide sleeve 41 and the valve needle 22 can only reciprocate in the up-down direction and cannot rotate. In this way, friction between the valve needle 22 and the valve seat 12 can be reduced when the valve needle 22 reciprocates and the valve needle 22 opens or blocks the valve port 131, wear between the valve needle 22 and the valve seat 12 is reduced, and noise generated in the electronic expansion valve 1 is also reduced.

In some embodiments, as shown in FIG. 24, the guide sleeve 41 is sleeved on the valve stem 21, the guide sleeve 41 is sleeved on an end portion of the valve stem 21 that faces the valve port 131, and the guide sleeve41 cooperates with the anti-rotation member 30 to limit the rotational degree of freedom ofthe guide sleeve 41, to further limit rotational degrees of freedom ofthe valve stem 21 and the valve needle 22. When the conversion member 50 rotates, the valve stem 21 and the valve needle 22 can only move and cannot rotate, so that friction between the valve needle 22 and the valve seat 12 can be reduced when the valve needle 22 opens or blocks the valve port 131.

In some examples, the rotation assembly includes the conversion member 50 and the rotor component 60. The rotor component 60 cooperates with the conversion member 50 to drive the conversion member 50 to rotate, and the conversion member 50 threadedly cooperates with the valve stem 21, to convert rotation of the conversion member 50 into reciprocating motion of the valve needle assembly 20. When the conversion member 50 rotates to drive the valve stem 21 to reciprocate and the valve stem 21 has a trend to rotate, the rotational degree of freedom of the valve stem 21 can be limited through cooperation of the guide sleeve 41 and the anti-rotation member 30, so that the valve stem 21 and the valve needle 22 can only reciprocate and cannot rotate. This reduces friction force between the valve needle 22 and the valve seat 12 when the valve needle 22 opens or blocks the valve port 131, reduces a degree of mutual wear between the valve needle 22 and the valve seat 12, facilitates prolonging a service life of the valve needle 22 and a service life of the electronic expansion valve 1.

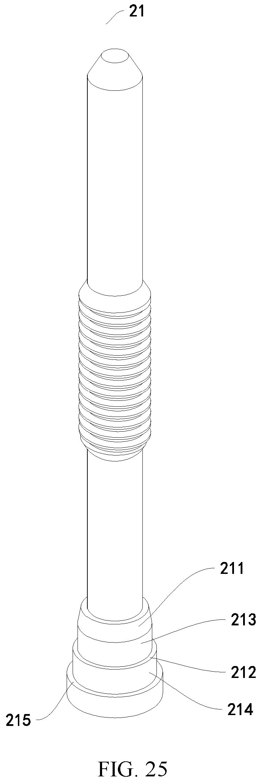

In some specific embodiments of this application, as shown in FIG. 24 and FIG. 25, an outer circumferential wall of the valve stem 21 has a first stepped surface 212. The first stepped surface 212 is configured to support the guide sleeve 41, to limit a position of the guide sleeve 41, and avoid detaching of the guide sleeve 41 from the valve stem 21.

In some embodiments, as shown in FIG. 25, a guide slope 211 is disposed on the outer circumferential wall of the valve stem 21, and the guide slope 211 extends obliquely toward the first stepped surface 212 to guide mounting of the guide sleeve 41, so that the guide sleeve 41 can be smoothly sleeved on the valve stem 21. The guide sleeve 41 is located between the guide slope 211 and the first stepped surface 212, to limit a position of the guide sleeve 41 on the valve stem 21, so that when the valve stem 21 reciprocates, the valve stem 21 can drive the guide sleeve 41 to reciprocate, and therefore rotation ofthe valve stem 21 and the valveneedle 22 is limited through cooperation of the guide sleeve 41 and the anti-rotation member 30.

In some embodiments, as shown in FIG. 25, the valve stem 21 has a first cylindrical portion 213. The first cylindrical portion 213 is located between the guide slope 211 and the first stepped surface 212, the guide sleeve 41 is sleeved on the first cylindrical portion 213, and the guide sleeve 41 is in interference fit with the first cylindrical portion 213. When the guide sleeve 41 is sleeved on the valve stem 21, the guide slope 211 can guide mounting of the guide sleeve 41, so that the guide sleeve 41 is smoothly sleeved on the first cylindrical portion 213, and the guide sleeve 41 smoothly cooperates with the first cylindrical portion 213.

After the guide sleeve 41 is sleeved on the first cylindrical portion 213, an end of the guide sleeve 41 cooperates with the first stepped surface 212 in an abutting manner, to limit the position of the guide sleeve 41 on the valve stem 21, and avoid detaching of the guide sleeve 41 from the valve stem 21.

In some specific embodiments of this application, as shown in FIG. 24 and FIG. 25, the valve needle assembly 20 further includes a valve sleeve 23. The valve sleeve 23 is sleeved on the valve stem 21, the valve sleeve 23 fixedly cooperates with the valve needle 22, and the valve sleeve 23 is movable relative to the valve stem 21. An end portion ofthe valve stem 21 that is close to the valve port 131 extends into the accommodation cavity 221 and can move in the accommodation cavity 221 for a specific distance, to compress the first elastic member 44 in the accommodation cavity 221, so thatthe first elastic member 44 has an acting force toward the valve port 131 on the valve needle 22, and therefore the valve needle 22 can fully block the valve port 131.

In some embodiments, as shown in FIG. 25, a second cylindrical portion 214 and a second stepped surface 215 are disposed on the valve stem 21. The valve sleeve 23 is sleeved on the second cylindrical portion 214, and the valve sleeve 23 is movable in the up-down direction relative to the second cylindrical portion 214. The second stepped surface 215 is adapted to cooperate with a lower end of the valve sleeve 23 in an abutting manner, and the guide sleeve 41 is adapted to cooperate with an upper end of the valve sleeve 23 in an abutting manner.

When the valve stem 21 and the guide sleeve 41 move downward relative to the valve sleeve 23 and the valve needle 22, the guide sleeve 41 cooperates with the upper end of the valve sleeve 23 in an abutting manner. In this case, the valve stem 21 can drive the valve needle 22 to move downward, so that the valve needle 22 can block the valve port. In this case, the valve stem 21 compresses the first elastic member 44 in the accommodation cavity 221, so thatthe first elastic member 44 has an acting force toward the valve port 131 on the valve needle 22, and therefore the valve needle 22 can fully block the valve port 131.

Specifically, the guide sleeve 41 cooperates with the upper end of the valve sleeve 23 in an abutting manner, to control a length of the valve stem 21 extending into the accommodation cavity 221, and further control an amount of compression of the valve stem 21 on the first elastic member 44, and avoid failure of the first elastic member 44.

When the valve stem 21 and the guide sleeve 41 move upward relative to the valve sleeve 23 and the valve needle 22, the valve sleeve 23 cooperates with the second stepped surface 215 in an abutting manner, to drive the valve sleeve 23 to move upward to drive the valve needle 22 to move upward, so that the valve needle 22 can smoothly open the valve port 131.

In some optional embodiments of this application, as shown in FIG. 6, the bearing component 42 is supported on the anti-rotation member 30, so that the bearing component 42 is used to limit a position of the anti-rotation member 30, to fasten the anti-rotation member 30 to the valve seat 12, and therefore the anti-rotation member 30 can limit rotation of the valve needle assembly 20.

In some examples, as shown in FIG. 8, FIG. 9, and FIG. 17, the valve seat 12 defines the mounting cavity 115, both the anti-rotation member 30 and the bearing component 42 are disposed in the mounting cavity 115, and the bearing component 42 is disposed on the side of the anti-rotation member 30 that faces away from the valve port 131, that is, located above the anti-rotation member 30. The bearing component 42 is sleeved on the conversion member 50. The conversion member 50 is provided with the first abutting portion 515 and the first support member 511 that are spaced apart in the up-down direction. The side of the anti-rotation member 30 that faces the bearing component 42 has the protrusion portion 32.

The upper end of the inner ring of the bearing component 42 abuts against the first abutting portion 515, and the lower end of the inner ring of the bearing component 42 cooperates with the first support member 511, to fasten the bearing component 42 and the conversion member 50 together. The upper end of the outer ring of the bearing component 42 cooperates with the second support member 111, and the lower end of the outer ring of the bearing component 42 cooperates with the protrusion portion 32 in an abutting manner, to fasten the outer ring of the bearing component 42 in the mounting cavity 115. In this way, when the valve needle assembly 20 reciprocates, the valve needle assembly 20 does not drive the conversion member 50 to reciprocate together.

Specifically, when the bearing component 42 is mounted, the bearing component 42 is first sleeved on the conversion member 50, so that the upper end of the inner ring of the bearing component 42 cooperates with the first abutting portion 515 in an abutting manner; the third part 503 is bent, so that the first support member 511 cooperates with the lower end of the inner ring of the bearing component 42; the bearing component 42 is disposed in the mounting cavity 115, so that the lower end of the outer ring of the bearing component 42 cooperates with the protrusion portion 32 in an abutting manner; and then the end portion of the valve seat 12 is bent, so that the second support member 111 cooperates with the upper end of the outer ring of the bearing component 42 in an abutting manner. In this case, the anti-rotation member 30 and the second support member 111 limit the position of the bearing component 42 in the up-down direction, to avoid movement of the bearing component 42 in the up-down direction with the valve needle assembly 20. Therefore, the bearing component 42 can stably support rotation of the conversion member 50.

When the lower end of the outer ring of the bearing component 42 cooperates with the protrusion portion 32 of the anti-rotation member 30 in an abutting manner, and the valve seat 12 is bent, so that the second support member 111 cooperates with the upper end of the outer ring of the bearing component 42 in an abutting manner, the second support member 111 has a downward pressing force on the bearing component 42. In this case, the bearing component 42 has a downward pressing force on the anti-rotation member 30, so that the lower end of the anti-rotation member 30 cooperates with the bottom wall of the mounting cavity 115, and the position of the anti-rotation member 30 in the mounting cavity 115 is limited, to fasten the anti-rotation member 30 in the mounting cavity 115, and avoid rotation of the anti-rotation member 30 in the mounting cavity 115. In this way, stable cooperation of the anti-rotation member 30 and the valve needle assembly 20 is ensured, and the anti-rotation member 30 can limit rotation of the valve needle assembly 20.

In some embodiments ofthis application, as shown in FIG. 6, the valve needle assembly 20 abuts against the valve seat 12 to block the valve port 131, a circumferential wall of the valve seat 12 is provided with a flow path opening 121, and liquid may flow into the valve seat 12 through the flow path opening 121 on the circumferential wall of the valve seat 12, and then flows out of the valve port 131.

In some embodiments, a plurality of flow path openings 121 are provided on the circumferential wall of the valve seat 12, and the plurality of flow path openings 121 are spaced apart in a circumferential direction of the valve seat 12, so that external liquid can evenly enter the valve seat 12 from the plurality of flow path openings 121, to facilitate increasing a liquid inlet amount of the electronic expansion valve 1 and increasing a flow rate of the electronic expansion valve 1.

An integrated valve 8 according to an embodiment of this application is described below. The integrated valve 8 according to this embodiment of this application includes the electronic expansion valve 1 according to the foregoing embodiment of this application.

According to the integrated valve 8 according to this embodiment of this application, the electronic expansionvalve 1 according to the foregoing embodiment of this application is used, and the first elastic member 44 is disposed between the valve stem 21 and the valve needle 22, so that the first elastic member 44 exerts the acting force toward the valve port 131 on the valve needle 22. In this way, when the valve needle 22 blocks the valve port 131, the abutting force between the valve needle 22 and the valve seat 12 is increased, so that the valve needle 22 can be closely attached to the valve seat 12 to fully block the valve port 131, to facilitate reducing the possibility of internal leakage of the electronic expansion valve 1.

In some embodiments of this application, the integrated valve 8 further includes a valve plate 70. The valve plate 70 is provided with an assembly cavity 73, a first flow path 71, and a second flow path 72. The first flow path 71 communicates with the assembly cavity 73 through a first opening, the second flow path 72 communicates with the assembly cavity 73 through a second opening, the electronic expansion valve 1 is mounted in the assembly cavity 73, the valve port 131 communicates with the second opening, and a flow path opening 121 provided on the valve seat 12 communicates with the first opening. External liquid flows along the first flow path 71 from the first opening through the flow path opening 121 and into the valve seat 12, and liquid in the valve seat 12 enters the second flow path 72 from the first opening through the valve port 131.

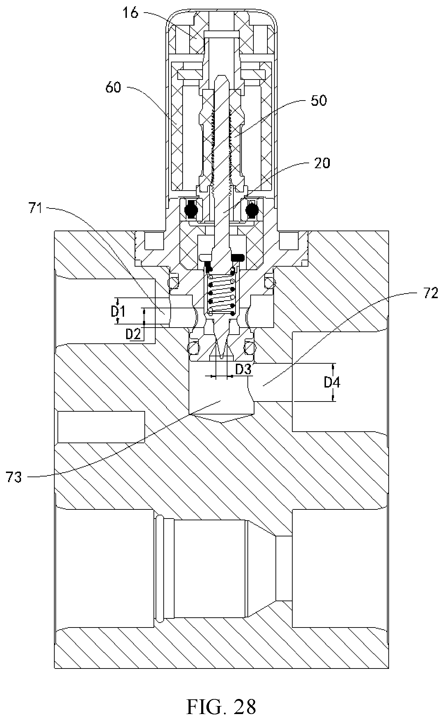

In some embodiments, as shown in FIG. 28, the first opening is provided toward the flow path opening 121, so that liquid in the first flow path 71 can smoothly enter the valve seat 12 through the flow path opening 121. The second opening is provided toward the valve port 131, so that liquid in the valve seat 12 can smoothly enter the second flow path 72 through the second opening.

In some embodiments of this application, as shown in FIG. 28, a minimum flow area of the first opening is D1, a minimum flow area of the flow path opening 121 is D2, a minimum flow area of the valve port 131 is D3, a minimum flow area of the second opening is D4, and D4>D1>2D2>4D3 is satisfied, to throttle and depressurize liquid.

Specifically, the liquid sequentially passes through the first opening, the flow path opening 121, the valve port 131, and the second opening, and flow areas of the first opening, the flow path opening 121, the valve port 131, and the second opening are gradually reduced, to gradually throttle and depressurize the liquid.

A heat management system 92 according to an embodiment of this application is described below. The heat management system 92 according to this embodimentofthis application includes the electronic expansion valve 1 or the integrated valve 8 according to the foregoing embodiment of this application.

According to the heat management system 92 according to this embodiment of this application, the electronic expansion valve 1 according to the foregoing embodiment of this application is used, and the first elastic member 44 is disposed between the valve stem 21 and the valve needle 22, so that the first elastic member 44 exerts the acting force toward the valve port 131 on the valve needle 22. In this way, when the valve needle 22 blocks the valve port 131, the abutting force between the valve needle 22 and the valve seat 12 is increased, so that the valve needle 22 can be closely attached to the valve seat 12 to fully block the valve port 131, to facilitate reducing the possibility of internal leakage of the electronic expansion valve 1.

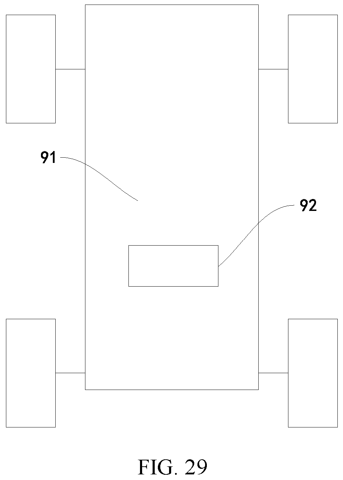

A vehicle 91 according to an embodiment of this application is described below with reference to FIG. 29. The vehicle 91 according to this embodiment of this application includes the heat management system 92 according to the foregoing embodiment of this application.

In the vehicle 91 according to this embodiment of this application, the heat management system 92 according to the foregoing embodiment of this application is used, and the first elastic member 44 is disposed between the valve stem 21 and the valve needle 22, so that the first elastic member 44 exerts the acting force toward the valve port 131 on the valve needle 22. In this way, when the valve needle 22 blocks the valve port 131, the abutting force between the valve needle 22 and the valve seat 12 is increased, so that the valve needle 22 can be closely attached to the valve seat 12 to fully block the valve port 131, to facilitate reducing the possibility of internal leakage of the electronic expansion valve 1.

Other composition and operations of the vehicle 91 according to this embodiment of this application are known to a person of ordinary skill in the art. Details are not described herein again.

In the descriptions of this specification, reference to descriptions of the terms "one embodiment", "some embodiments", "examples", "specific examples", "some examples", or the like means that specific features, structures, materials, or features described with reference to embodiments or examples are included in at least one embodiment or example of this application. In this specification, the schematic expressions of the foregoing terms are not necessarily for same embodiments or examples. In addition, specific features, structures, materials, or features described may be combined in a proper manner in any one or more of embodiments or examples. Moreover, a person skilled in the art may join and combine different embodiments or examples described in this specification.

Although embodiments of this application have been shown and described above, it will be understood that the foregoing embodiments are examples and will not be understood as a limitation on this application. A person of ordinary skill in the art may make changes, modifications, substitutions, and variations to the foregoing embodiments within the scope of this application.

## Claims

1. An electronic expansion valve, comprising:
a valve seat, wherein the valve seat is provided with a valve port;
a rotation assembly, wherein the rotation assembly rotates relative to the valve seat;
a valve needle assembly, wherein the valve needle assembly comprises a valve stem and a valve needle, the valve stem cooperates with the rotation assembly, to convert rotation of the rotation assembly into reciprocating motion ofthe valve stem, the valve stem does not rotate about an axial direction of the valve stem, and the valve needle is configured to open or block the valve port; and
a first elastic member, wherein the first elastic member is separately connected to the valve stem and the valve needle, and the valve needle is driven by the valve stem to reciprocate; and
when the valve needle blocks the valve port, the valve stem is capable of moving toward the valve port to compress the first elastic member to form a preloading force.

2. The electronic expansion valve according to claim 1, wherein an accommodation cavity is provided in the valve needle, the first elastic member is mounted in the accommodation cavity, the first elastic member is separately connected to the valve stem and the valve needle to exert an acting force toward the valve port on the valve needle.

3. The electronic expansion valve according to claim 1 or 2, further comprising a sleeve, wherein the sleeve is fastened to the valve seat, and the rotation assembly is rotatably disposed in the sleeve.

4. The electronic expansion valve according to claim 3, wherein
a first fitting member is disposed in the sleeve, the rotation assembly and the first fitting member are relatively rotatable, and the rotation assembly cooperates with the first fitting member, to perform radial limiting on the rotation assembly.

5. The electronic expansion valve according to claim 4, wherein the rotation assembly is inserted into and cooperates with the first fitting member.

6. The electronic expansion valve according to claim 5, wherein an insertion groove is provided on an end face ofthe first fitting member that faces the rotation assembly, and the rotation assembly is inserted into the insertion groove.

7. The electronic expansion valve according to any one of claims 1 to 6, wherein the rotation assembly comprises:
a conversion member, wherein the conversion member cooperates with the valve stem to convert rotation of the conversion member into reciprocating motion of the valve stem; and
a rotor component, wherein the rotor component cooperates with a first end of the conversion member to drive the conversion member to rotate.

8. The electronic expansion valve according to claim 7, wherein the conversion member comprises a first part disposed at the first end, the first part is a metal member, and the first part is welded to the rotor component.

9. The electronic expansion valve according to claim 8, wherein the conversion member further comprises a second part, the second part is fastened to the first part, the second part is a resin member, and the second part threadedly cooperates with the valve stem.

10. The electronic expansion valve according to any one of claims 7 to 9, wherein the valve seat is provided with a bearing component, a second end of the conversion member cooperates with the bearing component, and the second end is opposite to the first end.

11. The electronic expansion valve according to claim 10, wherein the conversion member comprises a third part, the third part is a metal member, the third part is provided with a first support member, and the bearing component is supported on the first support member.

12. The electronic expansion valve according to claim 11, wherein a part of the third part is bent to form the first support member.

13. The electronic expansion valve according to any one of claims 7 to 12, further comprising an anti-rotation member, wherein the anti-rotation member is disposed on a side of the conversion member that faces the valve port, and the anti-rotation member cooperates with the valve needle assembly to limit a rotational degree of freedom of the valve needle assembly.

14. The electronic expansion valve according to claim 13, wherein the valve needle assembly further comprises a guide sleeve, the guide sleeve is fastened to the valve stem, a cross section of the guide sleeve in a radial direction ofthe valve needle assembly is formed in a non-circular shape, and an outer circumferential wall of the guide sleeve is adapted to cooperate with the anti-rotation member to limit a rotational degree of freedom of the guide sleeve.

15. An integrated valve, comprising:
an electronic expansion valve, wherein the electronic expansion valve is the electronic expansion valve according to any one of claims 1 to 14; and
a valve plate, wherein the valve plate is provided with an assembly cavity, a first flow path, and a second flow path, the first flow path communicates with the assembly cavity through a first opening, and the second flow path communicates with the assembly cavity through a second opening; and
the electronic expansion valve is mounted in the assembly cavity, the valve port communicates with the second opening, and a flow path opening provided on the valve seat communicates with the first opening.

16. The integrated valve according to claim 15, wherein a minimum flow area of the first opening is D1, a minimum flow area of the flow path opening is D2, a minimum flow area of the valve port is D3, a minimum flow area of the second opening is D4, and D4>D1>2D2>4D3 is satisfied.

17. A heat management system, comprising the electronic expansion valve according to any one of claims 1 to 14 or the integrated valve according to claim 15 or 16.

18. A vehicle, comprising the heat management system according to claim 17.
